Europäisches Patentamt

European Patent Office

Office européen des brevets

(11) Veröffentlichungsnummer: **0 149 839**

**A2**

(12) # EUROPÄISCHE PATENTANMELDUNG

(21) Anmeldenummer: **84116175.5**

(22) Anmeldetag: **22.12.84**

(51) Int. Cl.⁴: **A 22 C 13/02**
**A 22 C 11/10**

(30) Priorität: **20.01.84 DE 3401890**

(43) Veröffentlichungstag der Anmeldung:
**31.07.85 Patentblatt 85/31**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Andrä, Klaus, Dr.**
**Konrad-Adenauer-Strasse 10**
**D-6501 Zornheim(DE)**

(72) Erfinder: **Hutschenreuter, Elfriede**
**Haardtstrasse 116**
**D-6208 Bad-Schwalbach(DE)**

(72) Erfinder: **Petry, Rudolf**
**Erlenweg 1**
**D-6200 Wiesbaden(DE)**

(54) **Verwendung einer gerafften Schlauchhülle.**

(57) Es wird die Verwendung einer gerafften Schlauchhülle wie Wursthülle zum portionsweisen Verpacken von pastösen Massen wie Wurstbrät, insbesondere zur Herstellung von Würsten, beschrieben. Die geraffte Schlauchhülle besitzt eine nach außen weisende schraubenförmige Hauptfaltenstruktur und besteht aus einer Folie, die zu einem Schlauch gebogen ist und deren Ränder eine Uberlappungsnaht bilden, welche in spiralförmigen Windungen um die Längsachse der gerafften Schlauchhülle angeordnet ist und deren Windungen die gleiche Drehrichtung wie die Hauptfaltenstruktur besitzen. Zur Verwendung der Schlauchhülle wird pastöse Masse, insbesondere Wurstbrät in die fortlaufend rotierende geraffte Schlauchhülle unter Entraffen eingepreßt. Nach Erreichen einer gewünschten gefüllten Schlauchhüllenlänge wird die Schlauchhülle abgedreht. Die rotation der Schlauchhülle beim Füllvorgang erfolgt in Füllrichtung gesehen in einer Drehrichtung, welche der Drehrichtung der Windungen der Hauptfaltenstruktur entspricht.

Die für die Verwendung bevorzugte Schlauchhülle zeigt eine Hauptfaltenstruktur und Nahtzone, die beide jeweils die Form eines rechtsgängigen Schraubengewindes aufweisen.

**Fig.2**

H O E C H S T   A K T I E N G E S E L L S C H A F T
KALLE  Niederlassung der Hoechst AG

84/K 007                        21. Dezember 1984

                                WLJ-Dr.Gt-cc

Verwendung einer gerafften Schlauchhülle

Die Erfindung bezieht sich auf die Verwendung einer gerafften Schlauchhülle wie Wursthülle zum portionsweisen
Verpacken von pastöser Masse, insbesondere zur Herstellung von Würsten. Sie bezieht sich ferner auf eine besondere Ausführungsform einer gerafften Schlauchhülle,
die für eine bevorzugte Ausgestaltung der Verwendung geeignet ist, und auf ein Verfahren zur Herstellung dieser
gerafften Schlauchhülle.

Die Herstellung von gerafften Schlauchhüllen, sog. Raupen, ist bekannt. So sind in den Figuren der US-A-
3,907,003 geraffte Schlauchhüllen dargestellt, die eine
nach außen weisende schraubenförmige Hauptfaltenstruktur
besitzen. Die Drehrichtung der Hauptfalte der Raupe in
Fig. 13 entspricht beispielsweise einem linksgängigen
Schraubengewinde, während die Hauptfalte der Raupe in
Fig. 10 wie ein rechtsgängiges Schraubengewinde verläuft.
Tatsächlich zeigen die in der Praxis bisher hergestellten
Raupen immer die in Fig. 13 dargestellte linksgängige
Windungsrichtung der Hauptfalte.

Es ist auch bekannt, Schlauchhüllen zu raffen, die aus
einer Folie bestehen, die zu einem Schlauch gebogen ist
und deren Ränder zu einer Überlappungsnaht miteinander
verbunden sind. So wird nach der EP-A-0 093 326 eine
Wursthülle mit einer Klebenaht in der Weise gerafft, daß
die Klebenaht spiralförmig um die Längsachse der gerafften Wursthülle angeordnet ist. Bei der in Fig. 4 dieser Druckschrift gezeigten Raupe hat die Klebenaht die Form einer linksgängigen, in Fig. 1a dagegen die Form einer rechtsgängigen Schraube.

In einem nicht vorveröffentlichten Vorschlag (EP-A-0 100 495, Fig. 6) wird eine Raupe gezeigt, bei der die Windungen der Klebenaht die gleiche Drehrichtung wie die Hauptfaltenstruktur aufweisen, nämlich in Richtung einer linksgängigen Schraube. Eine Raupe, bei der die Hauptfaltenstruktur und auch die Klebenaht jeweils in Form von rechtsgängigen Schrauben gewunden sind, wurde bisher noch nicht beschrieben.

Allen diesen Druckschriften kann man somit entnehmen, daß man bisher Raupen mit rechtsgängiger wie linksgängiger Drehrichtung der Hauptfaltenstruktur und auch mit rechtsgängiger wie linksgängiger Windung der Nahtzone beschrieben hat, ohne jedoch der Drehrichtung eine besondere Bedeutung beizumessen.

Es ist ferner Stand der Technik, geraffte Schlauchhüllen zum portionsweisen Verpacken von pastösen Massen wie Wurstbrät zu verwenden. Hierbei wird die geraffte Schlauchhülle auf das Füllrohr einer Füllvorrichtung (vgl. CA-A-874.380) aufgeschoben und das Füllgut in die Schlauchhülle eingepreßt, wobei sie fortlaufend entrafft wird. Die geraffte Schlauchhülle und der jeweils gefüllte Schlauchteil werden durch einen schnell rotierenden rohrförmigen Mitnehmer, an dessen Innenwand die unter dem Druck des Füllguts stehende Schlauchhülle unter Reibschluß eng anliegt, um das feststehende Füllrohr ständig in Rotation versetzt. Zur Unterteilung des gefüllten Schlauchteils in einzelne Abschnitte dienen zwei mit paarweise vorstehenden Laschen (Unterteilungszungen) versehene endlose Kettenbahnen. Sie bewegen sich mit der Geschwindigkeit der gefüllten Schlauchhülle parallel und in Füllrichtung jeweils rechts und links von dem austretenden Wurststrang. Ihre Laschen greifen mit ihren Einschnitten intermittierend in den rotierenden mit Wurstmasse gefüllten Schlauchteil ein, drücken ihn an dieser Stelle zusammen und stoppen in der Zusammenpressung die Rotation. Hierbei bilden sich Abdrehzöpfe, wodurch der Wuststrang in Würstchen gewünschter Länge portioniert wird. Die Länge der abgedrehten Würstchen entspricht dem Abstand zweier aufeinander folgender Laschen. Zwischen den Laschen sind an beiden Kettenbahnen Führungszungen befestigt, die mit ihren Ausnehmungen einen rohrförmigen Durchgang für die gefüllte Schlauchhülle bilden. Es ist noch darauf hinzuweisen, daß bei den bekannten Füllvorrichtungen der Mitnehmer ("chuck") in Füllrichtung gesehen im Uhrzeigersinn, also nach rechts, rotiert.

Wie nun die Anmelderin festgestellt hat, treten bei den gerafften Schlauchhüllen, wenn sie aus einem Schlauch mit einer längsaxialen, schraubenförmig verdrillten Überlappungsnaht bestehen, bei dem aufgezeigten Füllverfahren Probleme auf, die bei nahtlosen Schläuchen praktisch nie beobachtet wurden. So kommt es beim Abdrehen unter Verwendung der bekannten Füllvorrichtungen zu besonders häufigen Abrissen des Schlauchmaterials, was zu erheblichen Störungen des Verfahrensablaufs führt. Außerdem zeigen die gefüllten Schlauchabschnitte keine einheitlichen Längen.

Ausgehend von diesem aufgezeigten Stand der Technik besteht nun die Aufgabe der Erfindung darin, diese Probleme, welche speziell bei der Verwendung von gerafften Schlauchhüllen mit einer Längsnaht auftreten, zu beseitigen. Es soll die bisherige Verwendung so abgeändert werden, daß die Häufigkeit von Hüllenabrissen beim Füllvorgang stark veringert wird und die erhaltenen Produkte weitgehend gleiche Längen aufweisen.

Diese Aufgabe wird gelöst durch die im Patentanspruch 1 angegebene Verwendung und ihre besondere Ausgestaltung nach Anspruch 2, durch die spezielle, geraffte Schlauchhülle nach Anspruch 3 und ihre zweckmäßige Ausführungsform nach Anspruch 4 sowie durch das Verfahren nach Anspruch 5, das im Anspruch 6 und 7 in einer vorteilhaften Variante weitergebildet ist.

Zur Verwendung der gerafften Schlauchhülle wird in an sich üblicher Weise eine pastöse Masse in die rotierende, geraffte Schlauchhülle eingepreßt und der Schlauch nach Erreichen einer gewünschten Länge des gefüllten Schlauchteils wie eingangs beschrieben abgedreht. Für diese Rotationsbewegung wird die geraffte Schlauchhülle auf ihrer Außenseite von einem schnell rotierenden Mechanismus erfaßt, während zum Abdrehen ein Teil des bereits hergestellten Wurststrangs in seiner Lage festgehalten wird.

HOECHST AKTIENGESELLSCHAFT
KALLE Niederlassung der Hoechst AG

- 5 -

Das Portionieren des Wuststrangs durch Abdrehen wird praktisch nur bei der Kategorie der kleinen Wurshüllen durchgeführt, die bekanntlich ein Kaliber von kleiner als 35, insbesondere 15 bis 30 mm zeigen. Diese kleinen Wurshüllen dienen zur Herstellung und Formgebung von hautlosen Wurstprodukten kleiner Größe wie Wiener Würstchen. Sie werden auch als "Schäldarm" bezeichnet, da diese Wurshüllen nach dem Stopfen mit Wurstmasse und anschließendem Ausbilden einer Eigenhaut, die aus koaguliertem Proteinmaterial der Wurstmasse besteht, von dieser Eigenhaut der Wurst abgeschält werden.

Es ist nun erfindungswesentlich, daß beim Füllvorgang die Rotation des noch gerafften Teils der Schlauchhülle in Füllrichtung gesehen genau in der Richtung erfolgt, welche der Drehrichtung der Windungen der Hauptfalten-struktur und der Nahtzone entspricht. Zeigt beispielsweise die Hauptfalte der Raupe einen spiralförmigen Verlauf, der einem rechtsgängigen Schraubengewinde entspricht, so muß beim Füllvorgang der noch geraffte Schlauchteil - vom Füllrohr in Richtung des ausgepreßten Füllguts gesehen - im Uhrzeigersinn, d.h. nach rechts, rotieren. Bei einem linksgängigen Verlauf der Hauptfalte erfolgt die Rotation des gerafften Schlauchteils beim Füllvorgang nach links.

Die Bildung der Schlauchhülle mit einer Naht durch Verklebung der Randbereiche einer zu einem Schlauch gebogenen Folie, erfolgt auf übliche Weise, wie es z.B. in der US-A-4,401,135, US-A-4,399,839 oder US-A-4,478,670 beschrieben ist.

Hierzu wird gewöhnlich ein um seine Längsachse gebogener, blatt- oder bahnförmiger rechteckiger Folienzuschnitt oder eine entsprechend gebogene Folienbahn, vorzugsweise aus Cellulose oder faserverstärkter Cellulose, durch Überlappung und Verklebung der längsaxial sich erstreckenden Randbereiche in eine Schlauchhülle mit einer längsaxial sich erstreckenden Verbindungsnaht übergeführt. Die Nahtzone ist somit etwa doppelt so dick im Vergleich mit der übrigen Dicke der Schlauchhülle.

Das Raffen der Schlauchhülle erfolgt in der Weise, daß durch das Zusammenschieben der Schlauchhülle in axialer Richtung gegen eine Gegenkraft eine spiralförmig um die Raupenlängsachse verlaufende Hauptfalte entsteht. Geeignete Raffvorrichtungen für diesen Vorgang sind bekannt und bestehen beispielsweise aus mehreren ausgekehlten Raffrädern, die eine Exzenterbewegung ausführen, oder aus einem rotierenden hohlzylindrischen Ringteil, welches auf seiner Innenwand einen schraubenförmig gewundenen Vorsprung aufweist. Letztere Vorrichtung ist z.B. in der US-A-3,907,003 beschrieben. Um ein hohes Raffverhältnis und eine hohe Knickfestigkeit der Raupe zu erreichen, muß die Nahtzone ebenfalls spiralförmig um die Raupenlängsachse angeordnet werden, wobei die Anzahl der spiralförmigen Windungen der Nahtzone pro Hüllenlängeneinheit möglichst groß sein soll. Bei einem bekannten Verfahren (EP-A-0 093 326) wird hierzu eine verdrillt aufgewickelte Schlauchhülle einer Raffvorrichtung zugeführt. Sofern man die Raffvorrichtung der US-A-3,907,003 verwendet, so ist es besonders vorteilhaft, den Raffdorn in

HOECHST AKTIENGESELLSCHAFT
KALLE Niederlassung der Hoechst AG

- 7 -

Gegenrichtung zur Rotation des hohlzylindrischen Ringteils zu drehen, wodurch der auf dem Raffdorn aufsitzende, bereits geraffte Schlauchteil in Gegenrichtung zur Bewegung des hohlzylindrischen Ringteils von dem Raffdorn mitgenommen wird. Es ist auch möglich, die Schlauchhülle unmittelbar vor dem Einlaufen in das Raffelement zu verdrillen, indem man sie z.B. durch von außen angreifende Rollen um ihre Achse dreht.

Zur Herstellung der zur Lösung der eingangs dargestellten technischen Probleme besonders geeigneten Raupe läßt man den Raffdorn in der gleichen Richtung rotieren wie das beim späteren Abdrehen der Schlauchhülle vorgesehene Element. Da dieses Element in Füllrichtung gesehen üblicherweise nach rechts dreht, läßt man den Raffdorn in Raffrichtung gesehen ebenfalls im Uhrzeigersinn, d.h. nach rechts, rotieren. Anstelle des Raffdorns können auch andere Elemente wie z.B. die obengenannten Rollen die Schlauchhülle um ihre Achse nach rechts verdrehen. Die für das Raffen verantwortliche Kraft rotiert dagegen in Gegenrichtung, d.h. in Raffrichtung gesehen nach links. Durch die gegenläufige Drehrichtung der Schlauchhülle und der Raffkraft beim Raffvorgang erhält man besonders steife und knickfeste Raupen.

Bei der besonders vorteilhaften Verfahrensvariante nach Anspruch 7 wird die Schlauchhülle in einer bevorzugten Richtung auf das Raffelement zugeführt, die von der Überlappungsnaht der Schlauchhülle und der Drehrichtung der zum Raffen dienenden Kraft abhängig ist. Zur Her-

HOECHST  AKTIENGESELLSCHAFT
KALLE  Niederlassung der Hoechst AG

- 8 -

stellung der gerafften Schlauchhülle nach Anspruch 3 rotiert die Raffkraft entgegen dem Uhrzeigersinn, in Raffrichtung gesehen. Die Schlauchhülle wird dann in der
Weise axial auf die Raffkraft zu bewegt, daß die den
äußeren Teil der Überlappungsnaht bildende Folienrandzone ebenfalls gegen dem Uhrzeigersinn ausläuft. Auf
diese Weise wird erreicht, daß die Raffkraft beim Überstreichen der Überlappungsnaht von der äußeren Folienrandzone auf die innere übergleitet. Auf diese Weise
lassen sich höhere Raffgeschwindigkeiten erzielen und
die Gefahr von Beschädigungen der Nahtzone wird vermindert. Ein zusätzlicher Vorteil ergibt sich dadurch, daß
diese Raupe beim Füllprozeß kraftschlüssig von dem rotierenden Mitnehmer erfaßt und damit auch sicherer um
das Füllrohr gedreht wird, da der Mitnehmer bei dieser
erfindungsgemäßen Raupe in umgekehrter Richtung wie die
Raffkraft rotiert und damit von der den inneren Teil der
Überlappungsnaht bildenden Folienrandzone kommend auf
die Folienrandzone auftrifft, welche den äußeren Teil
der Überlappungsnaht bildet.

Die Erfindung wird durch Fig. 1 bis 5 näher erläutert.
Es zeigt

Fig. 1  die geraffte Schlauchhülle,

Fig. 1a einen vergrößerten Ausschnitt der gerafften
        Schlauchhülle nach Fig. 1 etwa in derem Bereich Ia,

Fig. 1b einen Schnitt nach Linie Ib-Ib der Fig. 1a,

HOECHST AKTIENGESELLSCHAFT
KALLE Niederlassung der Hoechst AG

- 9 -

Fig. 2    eine perspektivische Ansicht der Raupe nach
          Fig. 1,

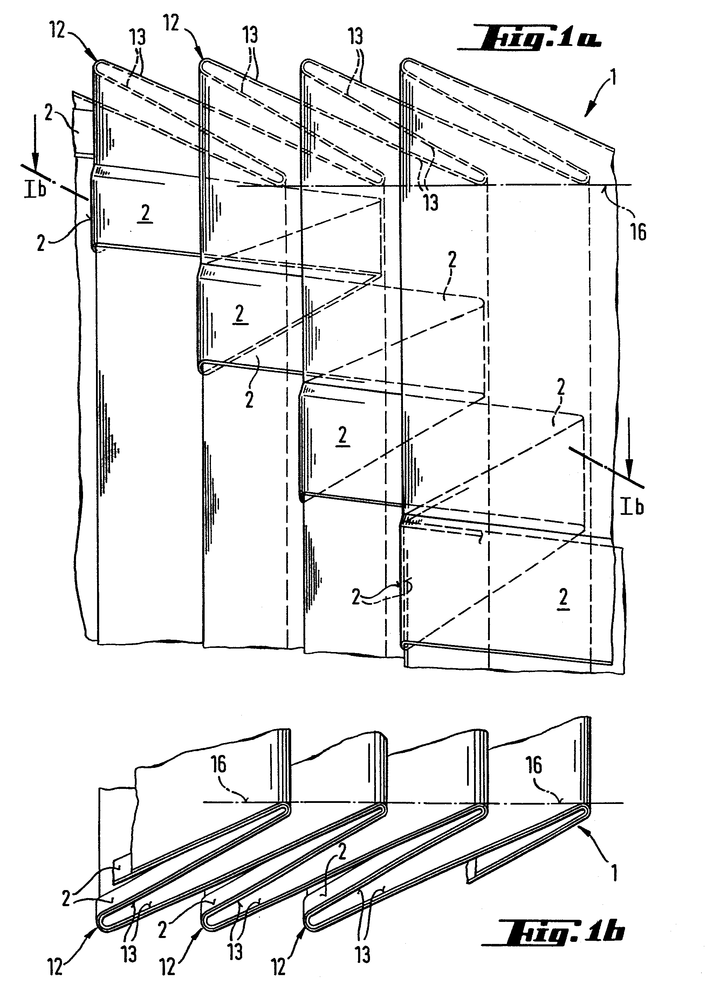

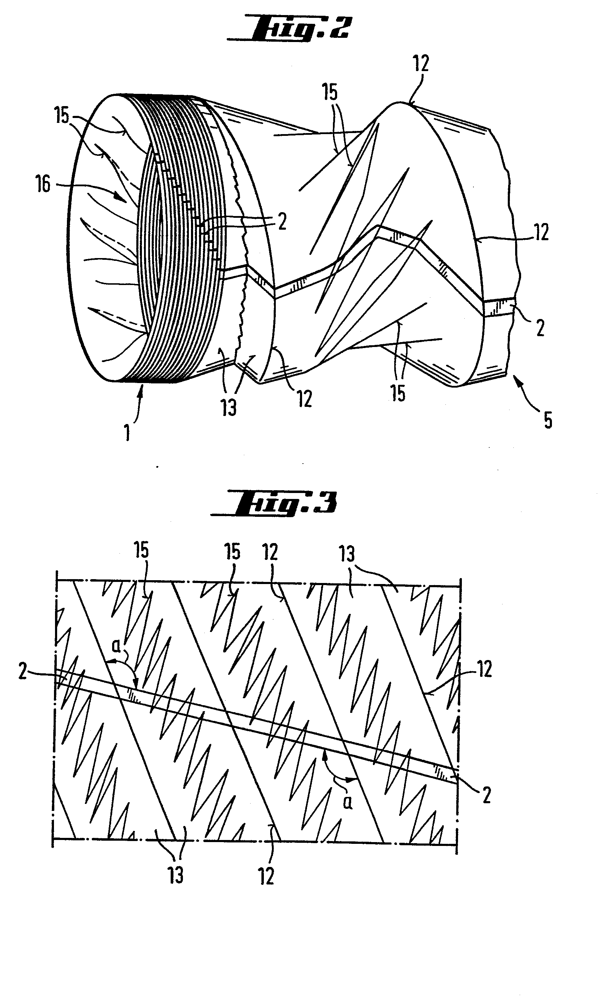

Fig. 3    das Faltenmuster der entrafften und aufgeschnittenen Raupe der Fig. 2.

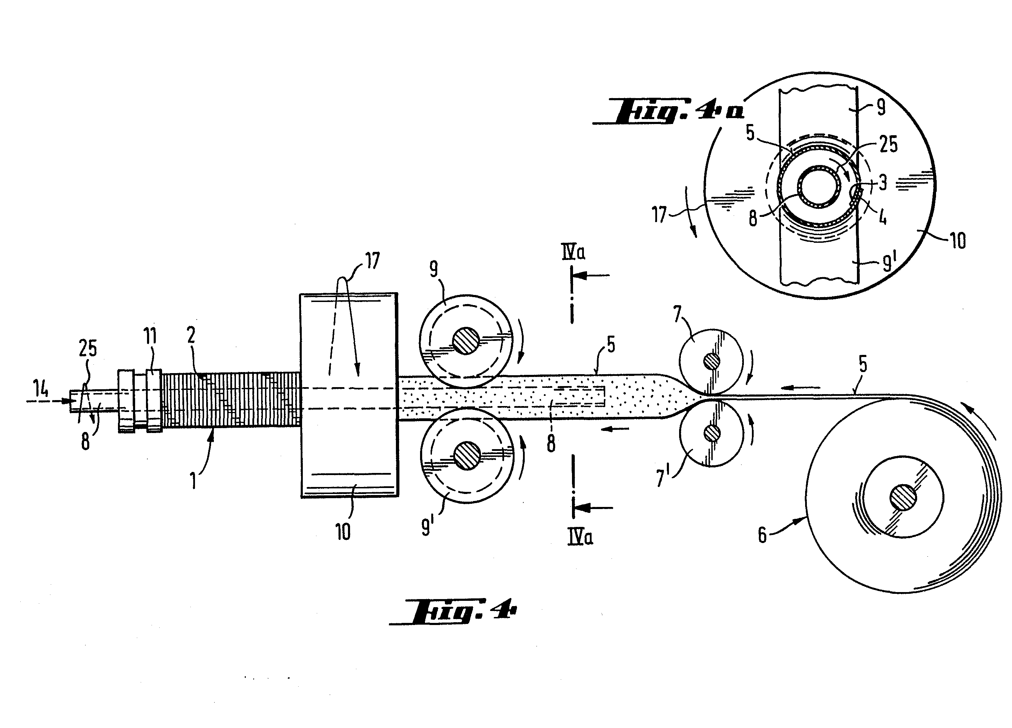

Fig. 4    das Raffen einer Schlauchhülle mit längsaxialer
          Nahtzone,

Fig. 4a   vergrößert einen Schnitt nach Linie IVa-IVa der
          Fig. 4,

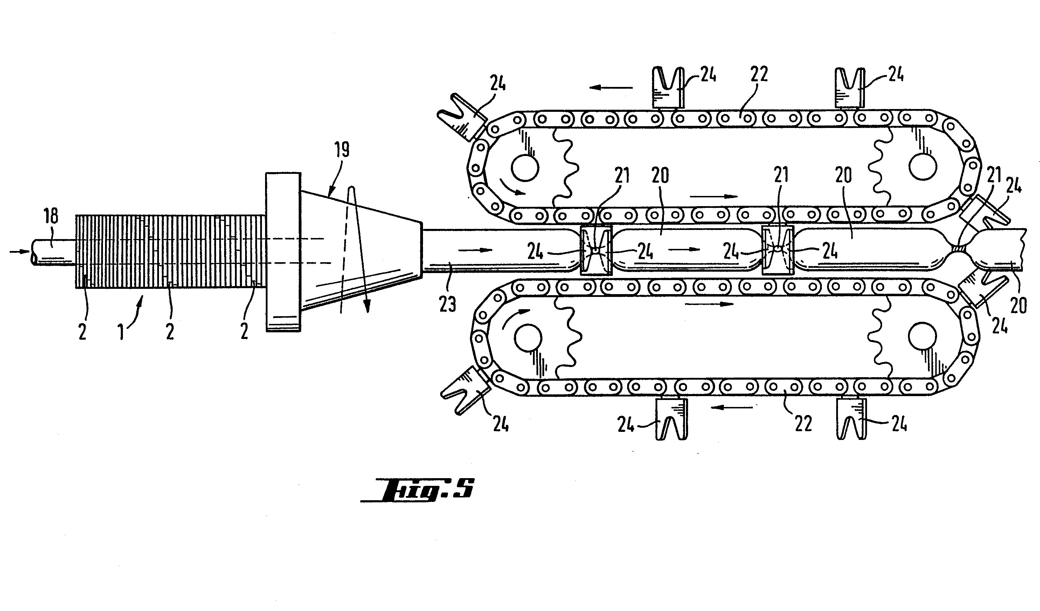

Fig. 5    den Füllvorgang unter Verwendung einer gerafften
          Schlauchhülle.

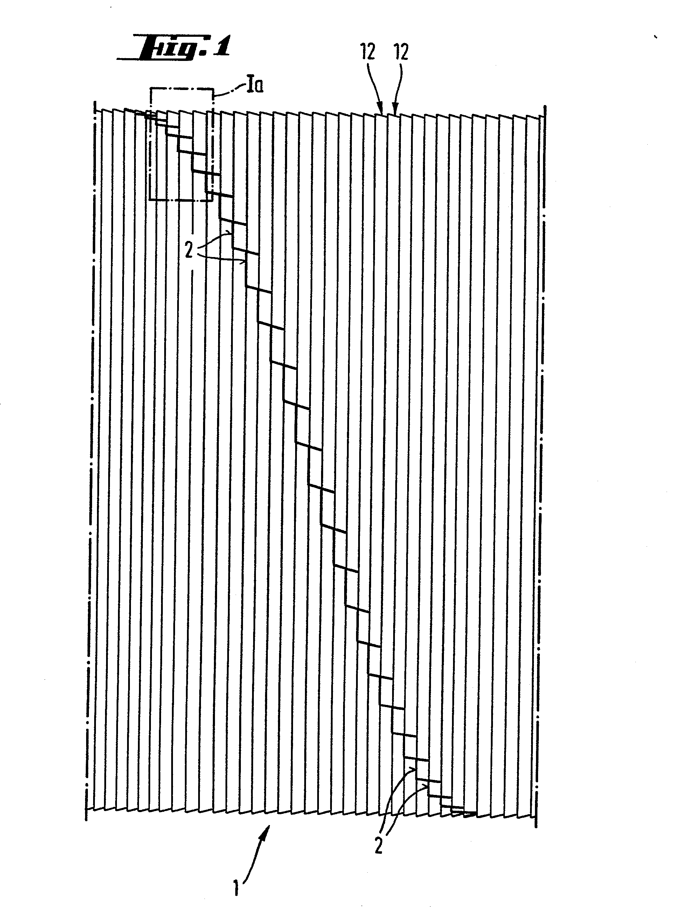

In Fig. 1/1a/1b zeigt die geraffte Schlauchhülle bzw.
Raupe 1 eine gewendelte Nahtzone 2 mit gleichmäßiger
Steigung. Der gestrichelt gezeichnete Teil der Nahtzone
2 befindet sich in der Doppellage 13 zwischen zwei Windungen der Hauptfalte 12. Mit 16 ist der Hohlkanal der
Raupe 1 bezeichnet. Die in der Fig. 1a und 1b ausschnittsweise und vergrößert dargestellte Raupe 1 wird in etwas
aufgezogenem Zustand gezeigt.

In Fig. 2 ist ein Stück der Raupe 1 dargestellt, an
derem einen Ende die Schlauchhülle 5 ein Stück weit abgezogen dargestellt ist. Man erkennt den spiralförmigen
Verlauf der Nahtzone 2 im noch gerafften Schlauchteil
und auch die Hauptfalte 12 erstreckt sich wendelförmig.
Die Nahtzone 2 wie die Hauptfalte 12 zeigen die Form

HOECHST AKTIENGESELLSCHAFT
KALLE Niederlassung der Hoechst AG

- 10 -

eines rechtsgängigen Schraubengewindes, wobei sich die Steigung der Nahtzone von der Steigung der Hauptfalte 12 stark unterscheidet.

In Fig. 3 ist das Faltenmuster und der Verlauf der Nahtzone 2 dargestellt, wie es sich ergibt, wenn man die Raupe entrafft, danach die erhaltene Schlauchhülle in längsaxialer Richtung aufschneidet und mit der ursprünglichen Schlauchaußenseite nach oben flachlegt. Zwischen den Faltenlinien der spiralförmigen Hauptfalte 12 befinden sich die zickzackförmigen Linien der Sekundärfalte 15. Für diese Schlauchhülle ist es charakteristisch, daß der in der Fig. 3 mit a bezeichnete Winkel stumpf ist, im Gegensatz zu den bisher dargestellten Raupen mit spiralig angeordneter Nahtzone, bei denen dieser Winkel kleiner als 90° ist. Wenn die durch Entfältelung der Raupe hergestellte entraffte Schlauchhülle flachgelegt wird, zeigt sie beispielsweise eine Flachbreite von 27,5 mm. Dann ist der in Achsrichtung gemessene Abstand der Linien der Hauptfalte 16 bis 25 mm. Dieser Abstand wird auch als Wendelabstand bezeichnet. Der Wendelabstand der Überlappungsnaht, d.h. der Abstand zweier Punkte der Überlappungsnaht zwischen einer vollen Umdrehung, auf der entrafften und flachgelegten Schlauchhülle ist wesentlich größer und beträgt zweckmäßigerweise 20 bis 150 cm.

In der Fig. 4 wird die Schlauchhülle 5 von der Rolle 6 abgewickelt und nach Durchlaufen der Quetschwalzen 7, 7' in aufgeblasenem Zustand gehalten, wobei durch den Raffdorn 8 in bekannter Weise Luft 14 eingeblasen wird. Die aufgeblähte Schlauchhülle 5 bewegt sich durch zwei weitere angetriebene Rollen 9, 9' in Richtung auf das nur formal gezeigte Raffelement 10, wo der eigentliche Raffvorgang stattfindet. Mit 11 ist ein Widerlager bezeichnet, gegen das der Schlauch zur Raupe 1 zusammengepreßt wird. Das Raffelement hat die in der US-A-3,907,003, Fig. 10, dargestellte hülsenartige Form. Der in Fig. 4 gezeigte wendelförmige Verlauf der Nahtzone 2 in der fertiggestellten Raupe wird durch Rotation des Raffdorns 8 erreicht, und zwar in diesem Fall im Uhrzeigersinn, in Raffrichtung betrachtet. Das Raffelement 10 rotiert hingegen in entgegengesetzter Richtung.

Der in Fig. 4a dargestellte Querschnitt der aufgeblasenen Schlauchhülle 5 zeigt die Folienrandzone 3, welche den inneren Teil und die Folienrandzone 4, welche den äußeren Teil der Überlappungsnaht bildet. Das in Richtung des Pfeils 17 sich um die Schlauchhülle 5 drehende hülsenförmige Raffelement 10 überstreicht dann zunächst die Folienrandzone 4 und dann die Folienrandzone 3. Der kleinere Pfeil 25 gibt die Drehrichtung des Raffdorns 8 an.

In Fig. 5 wird bei der von oben betrachteten an sich bekannten Anordnung die Wurstmasse in Pfeilrichtung durch das Füllrohr 18 einer Füllvorrichtung in die Raupe 1 eingepreßt, welche hierbei entrafft wird. Es entsteht ein Wurststrang der durch Verdrillungen 21 in einzelne Würstchen 20 unterteilt ist. Mit 19 ist der rohrförmige Mitnehmer bezeichnet, der zur Herstellung der Verdril-

HOECHST AKTIENGESELLSCHAFT
KALLE Niederlassung der Hoechst AG

- 12 -

lungen 21 in schnelle Rotation um das Füllrohr 18 versetzt wird und dabei die Raupe 1 und das jeweils entstehende Würstchen 23 gegenüber den durch umlaufende endlose Laschenketten 22 festgehaltenen Wurststrang in Pfeilrichtung dreht. Die zur Unterteilung des Wurststrangs vorgesehenen Laschen sind mit 24 bezeichnet. Außerdem besitzt jede Laschenkette 22 zwischen den Laschen 24 eine Anzahl nicht dargestellter Glieder (Führungszungen) zur Führung der Würstchen 20. Die zum Antrieb des Mitnehmers 19 erforderlichen Vorrichtungsteile sind nicht dargestellt. Der Abstand zweier Laschen 24 entspricht der gewünschten Würstchenlänge.

Es ist noch zu bemerken, daß die in den Figuren 1, 1a, 1b, 2, 4 und 5 gezeigten Hauptfalten 12 nicht wie dargestellt senkrecht verlaufen, sondern entsprechend ihrer rechtsgängigen Wendelung sich leicht schräg von oben nach unten erstrecken.

Bei der erfindungsgemäßen Verwendung von gerafften Schlauchhüllen mit einer Nahtzone, wobei man die Drehrichtung der Hauptfalte der Schlauchhülle in einen bestimmten Bezug zur Drehrichtung beim Abdrehvorgang setzt, wird ein praktisch störungsfreier Ablauf des Füllvorgangs erreicht. Die erhaltenen mit Füllmasse versehenen Schlauchabschnitte zeigen einheitliche Längen und konstante Füllkaliber.

--------------------------

HOECHST AKTIENGESELLSCHAFT
KALLE Niederlassung der Hoechst AG

84/K 007                    - 13 -              21. Dezember 1984
                                                WLJ-Dr.Gt-cc

### Patentansprüche

1. Verwendung einer gerafften Schlauchhülle wie Wursthülle zum portionsweisen Verpacken von pastösen Massen wie Wurstbrät, insbesondere zur Herstellung von Würsten, wobei die geraffte Schlauchhülle eine nach außen weisende schraubenförmige Hauptfaltenstruktur besitzt und aus einer Folie besteht, die zu einem Schlauch gebogen ist und deren Ränder eine Überlappungsnaht bilden, welche in spiralförmigen Windungen um die Längsachse der gerafften Schlauchhülle angeordnet ist und deren Windungen die gleiche Drehrichtung wie die Hauptfaltenstruktur besitzen, wobei zur Verwendung der Schlauchhülle pastöse Masse, insbesondere Wurstbrät in die geraffte Schlauchhülle unter Entraffen eingepreßt wird, die geraffte Schlauchhülle und der an das Füllrohr angrenzende entraffte und gefüllte Schlauchteil fortlaufend rotiert und nach Erreichen einer gewünschten gefüllten Schlauchhüllenlänge die Schlauchhülle abgedreht wird, wobei die Rotation in Füllrichtung gesehen in einer Drehrichtung erfolgt, welche der Drehrichtung der Windungen der Hauptfaltenstruktur entspricht.

2. Verwendung nach Anspruch 1, dadurch gekennzeichnet, daß die geraffte Schlauchhülle eine Hauptfaltenstruktur zeigt, deren Windungen einem rechtsgängigen Schraubengewinde entsprechen, und beim Füllen die geraffte Schlauchhülle um ihre Längsachse in Füllrichtung gesehen im Uhrzeigersinn rotiert.

3. Für die Verwendung nach Anspruch 2 geeignete geraffte Schlauchhülle, insbesondere Wursthülle, in Form eines Hohlzylinders mit einer nach außen weisenden schraubenförmigen Hauptfaltenstruktur, wobei die Schlauchhülle aus einer Folie besteht, die zu einem Schlauch gebogen ist und deren längsaxial sich erstreckenden Ränder miteinander in einer im Vergleich zur Dicke der Folie relativ dicken Nahtzone verbunden sind, und diese Nahtzone in spiralförmigen Windungen um die Längsachse der gerafften Schlauchhülle angeordnet ist, dadurch gekennzeichnet, daß die Hauptfaltenstruktur und die Nahtzone in Raffrichtung gesehen jeweils die Form eines rechtsgängigen Schraubengewindes aufweisen.

4. Geraffte Schlauchhülle nach Anspruch 3, dadurch gekennzeichnet, daß die Nahtzone aus den überlappend miteinander verbundenen Rändern der Folie besteht.

5. Verfahren zur Herstellung der gerafften Schlauchhülle nach Anspruch 3, wobei eine in Richtung ihrer Längsachse fortbewegte Schlauchhülle mit einer längsaxial sich erstreckenden Nahtzone in Längsrichtung gerafft und zusammengepreßt wird, indem eine zum längsaxialen Raffen dienende Kraft auf die Schlauchhüllenaußenseite von zumindest einem um die Längsachse der Schlauchhülle rotierenden Element aufgebracht wird, dadurch gekennzeichnet, daß diese Kraft in Raffrichtung gesehen entgegen dem Uhrzeigersinn rotiert und daß eine weitere auf die Schlauchhülle einwirkende Kraft die Schlauchhülle in Gegenrichtung verdreht.

6. Verfahren nach Anspruch 5, dadurch gekennzeichnet, daß die weitere auf die Schlauchhülle einwirkende Kraft auf die Innenseite des bereits gerafften Schlauchhüllenteils einwirkt und dabei die Schlauchhülle in Gegenrichtung zur Raffkraft verdreht.

7. Verfahren nach Anspruch 5 oder 6, bei dem die Nahtzone der Schlauchhülle aus den überlappend miteinander verbundenen Rändern der Folie besteht, dadurch gekennzeichnet, daß die Schlauchhülle in der Weise in Richtung auf das rotierende Element fortbewegt wird, daß die auf ihre Außenseite auftreffende, um ihre Längsachse entgegen dem Uhrzeigersinn rotierende zum Raffen dienende Kraft beim Überstreichen der Nahtzone zunächst auf die äußere Folienrandzone und danach auf die innere Folienrandzone der zu der Schlauchhülle geformten Folie auftrifft.

**Fig. 1**

Fig. 1a

Fig. 1b

**Fig.2**

**Fig.3**

Fig. 4a

Fig. 4

0149839

5/5

Fig. 5